# EUROPÄISCHE PATENTSCHRIFT

(11) **EP 1 919 655 B1**
(45) Veröffentlichungstag und Bekanntmachung des Hinweises auf die Patenterteilung: **23.12.2009**
(21) Anmeldenummer: 06792876.2
(22) Anmeldetag: 17.08.2006
(51) Int. Cl.: B23P 15/00, H01F 7/08, H01F 41/02, F02M 61/16, F02M 51/06, B60T 8/36, F16K 31/06

(54) **VERFAHREN ZUR HERSTELLUNG EINES FESTEN GEHÄUSES**
METHOD FOR PRODUCING A SOLID HOUSING
PROCEDE POUR REALISER UNE CAGE SOLIDE

(30) Priorität: 19.08.2005 DE 102005039288
(43) Veröffentlichungstag der Anmeldung: 14.05.2008
(73) Patentinhaber: ROBERT BOSCH GMBH, 70442 Stuttgart (DE)
(72) Erfinder: SEITTER, Max, 75417 Muehlacker (DE); GRANER, Juergen, 74372 Sersheim (DE); HAUBOLD, Tilla, 70192 Stuttgart (DE); OETINGER, Stefan, 96264 Altenkunstadt (DE)
(86) Internationale Anmeldenummer: PCT/EP2006/065399
(87) Internationale Veröffentlichungsnummer: WO 2007/020281

(56) Entgegenhaltungen:
- EP-A2- 0 585 782
- WO-A-2005/061150
- DE-A1- 3 502 287
- DE-A1- 19 503 736
- DE-C2- 4 237 405
- JP-A- 11 077 336

## Beschreibung

### Stand der Technik

Die Erfindung geht aus von einem Verfahren zur Herstellung eines festen Gehäuses nach der Gattung des Hauptanspruchs.

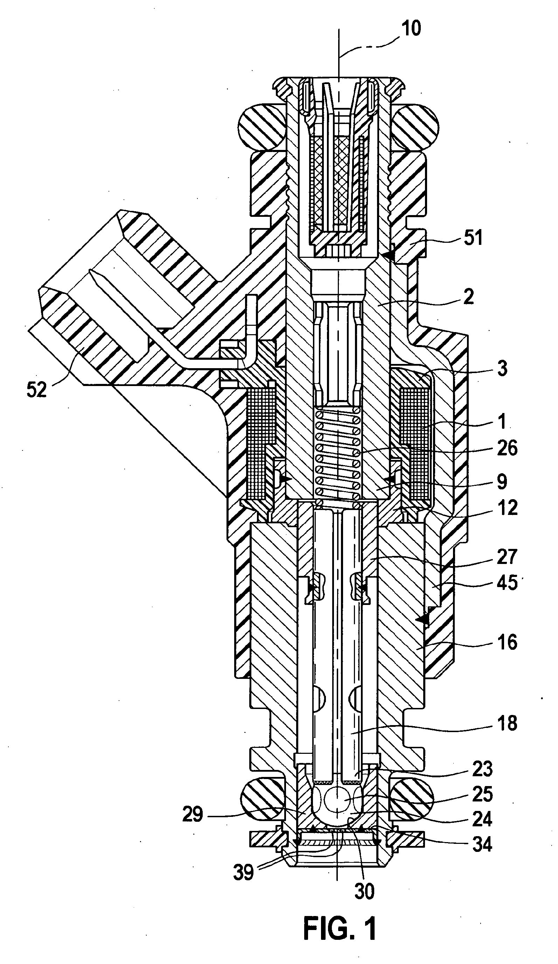

In der Figur 1 ist ein bekanntes Brennstoffeinspritzventil aus dem Stand der Technik dargestellt, das einen klassischen dreiteiligen Aufbau eines inneren metallenen Strömungsführungsteils und zugleich Gehäusebauteils besitzt. Dieses innere Ventilrohr wird aus einem einen Innenpol bildenden Einlassstutzen, einem nichtmagnetischen Zwischenteil und einem einen Ventilsitz aufnehmenden Ventilsitzträger gebildet und in der Beschreibung zu Figur 1 näher erläutert.

Aus der DE 35 02 287 A1 ist bereits ein Verfahren zur Herstellung eines hohlzylindrischen metallenen Gehäuses mit zwei magnetisierbaren Gehäuseteilen und einer dazwischen liegenden, die Gehäuseteile magnetisch trennenden, amagnetischen Gehäusezone bekannt. Dieses metallene Gehäuse wird dabei aus einem magnetisierbaren Rohling einstückig bis auf ein Übermaß im Außendurchmesser vorbearbeitet, wobei in der Innenwand des Gehäuses in der Breite der gewünschten mittleren Gehäusezone eine Ringnut eingestochen wird. Bei rotierendem Gehäuse wird ein nichtmagnetisierbares Füllmaterial in die Ringnut unter Erwärmung des Ringnutbereichs gefüllt und die Rotation des Gehäuses bis zur Erstarrung des Füllmaterials aufrechterhalten. Anschließend wird das Gehäuse außen bis auf das Endmaß des Außendurchmessers überdreht, so dass keine Verbindung mehr zwischen den magnetisierbaren Gehäuseteilen besteht. Ein derart hergestelltes Ventilgehäuse kann z.B. in Magnetventilen für Antiblockiersysteme (ABS) von Kraftfahrzeugen zum Einsatz kommen.

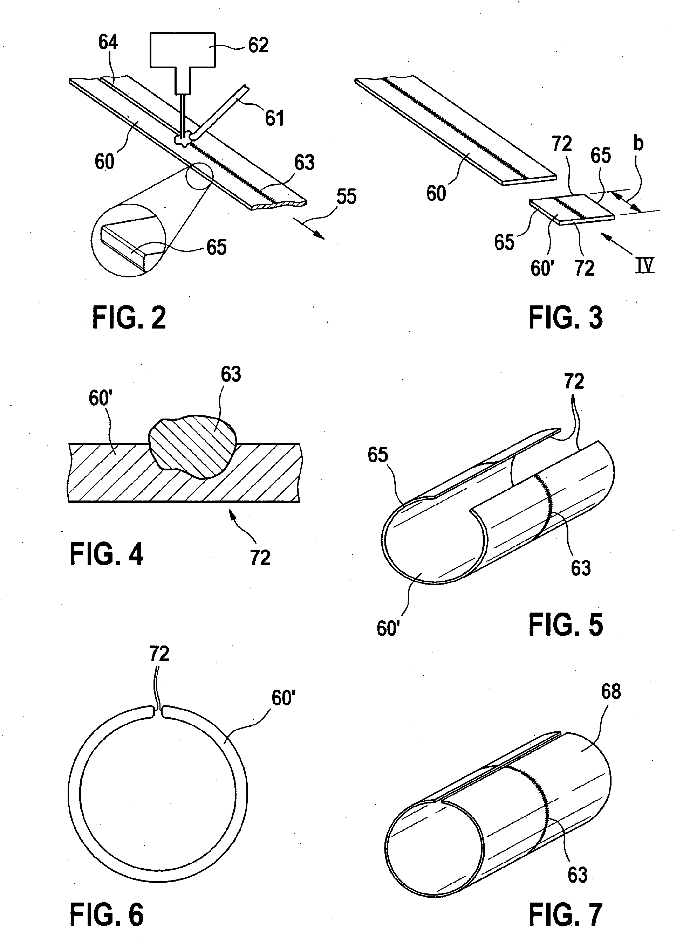

Bekannt sind des weiteren aus der DE 42 37 405 C2 Verfahren zur Herstellung eines festen Kerns für Einspritzventile für Brennkraftmaschinen (Figur 5 des Dokuments). Die Verfahren zeichnen sich dadurch aus, dass unmittelbar oder über vorherige Umwandlungsprozesse ein einteiliges hülsenförmiges, magnetisches, martensitisches Werkstück bereitgestellt wird, das eine örtliche Wärmebehandlung in einem mittleren Abschnitt des magnetischen, martensitischen Werkstücks zur Umwandlung dieses mittleren Abschnitts in einen nichtmagnetischen, austenitischen mittleren Abschnitt erfährt. Alternativ werden bei der örtlichen Wärmebehandlung mittels Laser geschmolzenes Austenit bzw. geschmolzenes Ferrit bildende Elemente an den Ort der Wärmebehandlung zur Bildung eines nichtmagnetischen, austenitischen mittleren Abschnitts des festen Kerns hinzugefügt.

Aus dem nächstliegenden Stand der Technik WO 2005/061150 A ist ein Verfahren nach der Gattung des Hauptanspruchs bekannt geworden, das die folgenden Schritten aufweist:
(a) Bereitstellen von wenigstens drei flachen metallischen Blechen nebeneinander, die jeweils unmittelbar benachbart unterschiedliche Magneteigenschaften aufweisen,
(b) Fügen der wenigstens drei Bleche an den unmittelbar benachbart liegenden Begrenzungskanten zur Bildung eines Blechabschnitt,
(c) Verformung des Blechabschnitts in eine Hülsenform,
(d) gegenseitige Befestigung der sich nun gegenüberliegenden, in Längsrichtung der Hülse verlaufenden Begrenzungskanten zur Bildung eines Hülsenrohlings,
(e) Endbearbeitung des Hülsenrohlings bis zum Erreichen einer gewünschten Geometrie des Gehäuses.

### Vorteile der Erfindung

Das erfindungsgemäße Verfahren zur Herstellung eines festen Gehäuses mit den kennzeichnenden Merkmalen des Hauptanspruchs hat den Vorteil, dass auf besonders einfache und kostengünstige Art und Weise Gehäuse mit einer magnetischen Trennung großserientechnisch zuverlässig herstellbar sind.

Insbesondere ist durch die Einfachheit der Einzelbauteile nur ein gegenüber den bekannten Herstellungsverfahren herabgesetzter Aufwand an Spezialwerkzeugen notwendig. Als Ausgangsmaterial kann einfach durch Walzen herstellbares Bandmaterial für die benötigten Blechstreifen verwendet werden. Auch die Weiterverarbeitung der abgelängten Blechstücke kann mit sehr kostengünstigen Blechumformungsprozessen geschehen.

Kommen Endlosblechbänder als Blechstreifen zum Einsatz, so kann der Fertigungsprozess kostengünstig und taktzeitreduziert gestaltet werden.

Von Vorteil ist es zudem, dass eine hohe Flexibilität in der Ausgestaltung der Geometrie des Gehäuses selbst, wie z.B. bei Länge, Außendurchmesser, Abstufungen ermöglicht ist.

Durch eine großserientechnische Fertigung der Gehäuse können die bei üblicher Herstellungstechnologie kritischen Schweißnähte hier durch gute Zugänglichkeit und optimal einstellbare Parameter sehr gut auf die Prozesssicherheit optimiert werden.

Durch die in den Unteransprüchen aufgeführten Maßnahmen sind vorteilhafte Weiterbildungen und Verbesserungen des im Hauptanspruch angegebenen Verfahrens möglich.

### Zeichnung

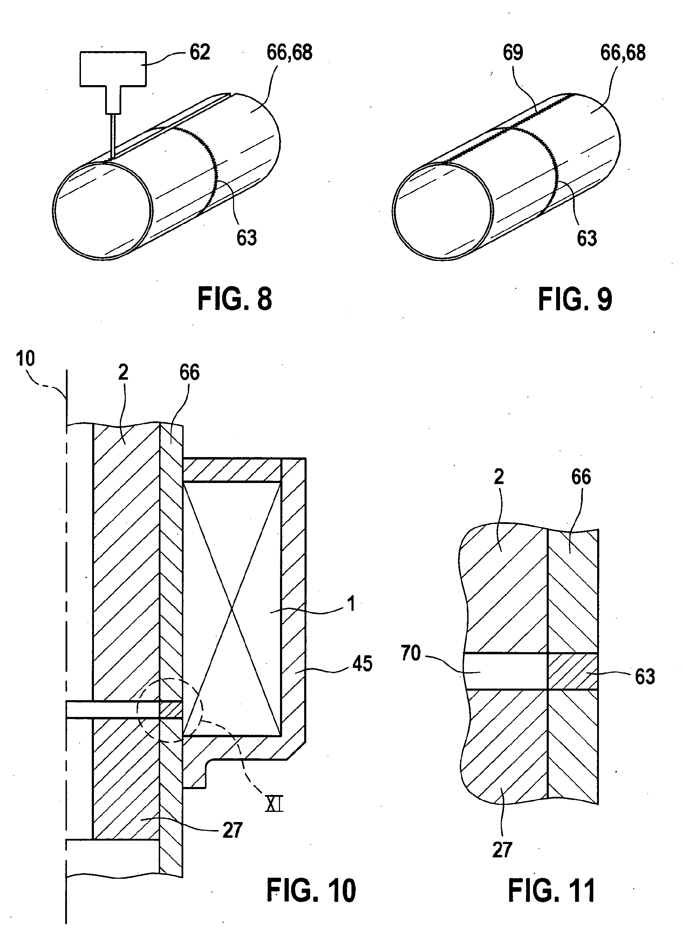

Ausführungsbeispiele der Erfindung sind in der Zeichnung vereinfacht dargestellt und in der nachfolgenden Beschreibung näher erläutert. Es zeigen Figur 1 ein Brennstoffeinspritzventil gemäß dem Stand der Technik mit einem dreiteiligen inneren metallenen Ventilrohr als Gehäuse, Figuren 2 bis 9 schematisch Verfahrensschritte eines erfindungsgemäßen Verfahrens zur Herstellung eines festen Gehäuses, Figur 10 einen schematischen Ausschnitt aus einem Einspritzventil mit einem erfindungsgemäß hergestellten Gehäuse und Figur 11 den Ausschnitt XI in Figur 10 in einer vergrößerten Darstellung.

### Beschreibung der Ausführungsbeispiele

Bevor anhand der Figuren 2 bis 9 die erfindungsgemäßen Verfahrensschritte des Verfahrens zur Herstellung eines festen Gehäuses beschrieben werden, soll anhand von Figur 1 ein Brennstoffeinspritzventil des Standes der Technik als ein mögliches Einsatzprodukt für ein erfindungsgemäß hergestelltes Gehäuse näher erläutert werden.

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlassstutzen und Innenpol dienenden rohrförmigen Kern 2, der beispielsweise über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes nichtmagnetisches Zwischenteil 12 durch Schweißen verbunden und umgibt das Kernende 9 teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 ist eine axial bewegbare Ventilnadel 18 angeordnet. Am stromabwärtigen Ende 23 der Ventilnadel 18 ist ein kugelförmiger Ventilschließkörper 24 vorgesehen, an dessen Umfang beispielsweise fünf Abflachungen 25 zum Vorbeiströmen des Brennstoffs vorgesehen sind.

Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schließen des Einspritzventils dient der elektromagnetische Kreis mit der Magnetspule 1, dem Kern 2 und einem Anker 27. Der rohrförmige Anker 27 ist mit einem dem Ventilschließkörper 24 abgewandten Ende der Ventilnadel 18 durch beispielsweise eine Schweißnaht fest verbunden und auf den Kern 2 ausgerichtet. In das stromabwärts liegende, dem Kern 2 abgewandte Ende des Ventilsitzträgers 16 ist ein zylinderförmiger Ventilsitzkörper 29, der einen festen Ventilsitz 30 aufweist, durch Schweißen dicht montiert.

Der kugelförmige Ventilschließkörper 24 der Ventilnadel 18 wirkt mit dem sich in Strömungsrichtung kegelstumpfförmig verjüngenden Ventilsitz 30 des Ventilsitzkörpers 29 zusammen. An seiner unteren Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöfnungen 39 vorgesehen.

Um den Magnetfluss zur optimalen Betätigung des Ankers 27 bei Bestromung der Magnetspule 1 und damit zum sicheren und genauen Öffnen und Schließen des Ventils zu dem Anker 27 zu leiten, ist die Magnetspule 1 von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kern 2 und seinem anderen Ende an dem Ventilsitzträger 16 anliegt und mit diesen z. B. durch Schweißen, Löten bzw. Kleben verbindbar ist. Ein inneres metallenes Ventilrohr als Grundgerüst und damit auch Gehäuse des Brennstoffeinspritzventils bilden der Kern 2, das nichtmagnetische Zwischenteil 12 und der Ventilsitzträger 16, die fest miteinander verbunden sind und sich insgesamt über die gesamte Länge des Brennstoffeinspritzventils erstrecken. Alle weiteren Funktionsgruppen des Ventils sind innerhalb oder um das Ventilrohr herum angeordnet. Bei dieser Anordnung des Ventilrohrs handelt es sich um den klassischen dreiteiligen Aufbau eines Gehäuses für ein elektromagnetisch betätigbares Aggregat, wie ein Ventil, mit zwei ferromagnetischen bzw. magnetisierbaren Gehäusebereichen, die zur wirkungsvollen Leitung der Magnetkreislinien im Bereich des Ankers 27 mittels eines nichtmagnetischen Zwischenteils 12 magnetisch voneinander getrennt oder zumindest über eine magnetische Drosselstelle miteinander verbunden sind.

Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffumspritzung 51 gehört beispielsweise ein mitangespritzter elektrischer Anschlussstecker 52.

Mit den in den Figuren 2 bis 9 schematisch angedeuteten Verfahrensschritten des erfindungsgemäßen Verfahrens zur Herstellung eines festen Gehäuses ist es in vorteilhafter Weise möglich, besonders einfach und kostengünstig dünnwandige Gehäuse 66 für verschiedenste Einsatzzwecke, u.a. bevorzugt für elektromagnetisch betätigbare Ventile herzustellen, die ein oben beschriebenes dreiteiliges Ventilrohr ersetzen können.

In einem ersten Verfahrensschritt (Figur 2) wird ein flacher Blechstreifen 60 bereitgestellt, wobei der Blechstreifen 60 aus einem ferromagnetischen und/oder weichmagnetischen bzw. magnetisierbaren Material besteht und z.B. ein ferritische oder ein martensitisches Materialgefüge aufweist. Bei diesem bereitzustellenden Blechstreifen 60 handelt es sich um einen flach gewalzten, exakt gearbeiteten und maßgeschneiderten Blechabschnitt, der als "taylored blank" bezeichnet wird. Als gewalztes Grundmaterial kann z.B. der Werkstoff 1.4418 oder der Werkstoff 1.4016 zum Einsatz kommen. Der Blechstreifen 60 kann für eine besonders effektive Herstellung der Gehäuse 66 als flaches Endlosband bereitgestellt werden. Während der Blechstreifen 60 entsprechend dem Pfeil 55 in Längsrichtung des Bandes bewegt wird, erfolgt ein Einlegieren von Nickel, Mangan, Kohlenstoff oder Stickstoff einzeln oder in Kombination mittels eines Zusatzdrahtes 61 oder eines Pulvers in einem mittleren Bereich des Blechstreifens 60, und zwar in solcher Menge, dass ein nichtmagnetisierbares Gefüge entsteht. Das schweißtechnische Aufschmelzen des Zusatzdrahtes 61 oder Pulvers zum Einlegieren des Nickels oder eines anderen Zusatzstoffe geschieht mittels einer Schweißanlage 62. Als Verfahren zum Aufschmelzen können Laserschweißen, Elektronenstrahlschweißen, Plasmaschweißen o.ä. zur Anwendung kommen. Anstelle eines Zusatzdrahtes 61 oder eines Zusatzpulvers können die gewünschten Zusatzstoffe auch bereits vor dem Aufschmelzen durch partielles Beschichten oder Aufwalzen auf dem Blechstreifen 60 aufgebracht werden. Eine in dem mittleren Bereich des Blechstreifens 60 entstehende Legierzone 63 stellt letztlich den Bereich der magnetischen Trennung dar. Im Blechstreifen 60 kann optional im Bereich der Legierzone 63 eine Längsnut 64 vorgesehen sein, damit der Materialaufbau durch den Zusatzwerkstoff minimiert wird. Die Längsnut 64 kann z.B. mittels einer profilierten Walze vor dem Einlegieren in den Blechstreifen 60 eingebracht werden. Die Begrenzungskanten 65 des Blechstreifens 60 sind beispielsweise mit einer Fase versehen, um später eine Verschweißung der sich gegenüber stehenden Begrenzungskanten 65 zu optimieren (Figur 8).

Durch das mittlere Einlegieren von Nickel in den Blechstreifen 60 entstehen drei längsgerichtete Zonen, die jeweils unmittelbar aufeinanderfolgend aufgrund des eingeschmolzenen Materials unterschiedliche Magneteigenschaften aufweisen. Dabei weisen die beiden äußeren Zonen des Blechstreifens 60 die gleichen Magneteigenschaften auf, während die mittlere Legierzone 63 ein nichtmagnetisierbares, insbesondere austenitisches Materialgefüge annimmt und magnetisch von den beiden äußeren Zonen getrennt ist.

Nachfolgend wird der endlose Blechstreifen 60 auf eine gewünschte Länge abgelängt, wobei ein Blechstück 60' entsteht, dessen Breite b letztlich dem Umfang des späteren Gehäuses 66 entspricht. In Figur 3 ist ein flaches Blechstück 60' mit einer definierten Breite b gezeigt, das neben den Begrenzungskanten 65 von zwei gegenüber liegenden Schnittkanten 72 begrenzt ist. Figur 4 zeigt eine Ansicht entsprechend der Blickrichtung IV in Figur 3 auf eine Schnittkante 72 des Blechstücks 60', aus der deutlich wird, dass sich die Legierzone 63 mit dem Zusatzwerkstoff Nickel beispielsweise nicht über die gesamte Dicke des Blechstücks 60' erstreckt, sondern nur über einen Teilbereich, z.B. über 2/3 der Dicke.

Alternativ kann die Legierzone 63 auch über die gesamte Dicke des Blechstücks 60' verlaufen. Durch eine in den Blechstreifen 60 eingefräste oder rollierte Längsnut 64 kann z.B. auch die Materialanhäufung über die Blechstärke hinaus minimiert werden.

In einem weiteren Bearbeitungsschritt wird das derart vorliegende Blechstück 60' durch Rollen bzw. Rollieren oder Biegen in eine Hülsenform gebracht und zwar bis zu einem Zustand, an dem sich die beiden Schnittkanten 72, die sich über alle drei Zonen des Blechstücks 60' erstrecken, nah gegenüberliegen bzw. berühren. Das Rundbiegen der Blechstücke 60' kann mehrstufig erfolgen. Dabei kommt z.B. ein dornartiges Werkzeug zum Einsatz (Figur 5). In Figur 6 ist eine Seitenansicht des Blechstücks 60' an der Begrenzungskante 65 dargestellt. Ähnlich wie die Begrenzungskanten 65 des Blechstreifens 60 sind beispielsweise auch die Schnittkanten 72 mit je einer Fase versehen, die vor dem Rundbiegen angebracht werden und die dem verbesserten Gegenüberliegen der Schnittkanten 72 zur gegenseitigen Befestigung dienen.

Nach diesem Verfahrensschritt liegt ein Hülsenrohling 68 vor, dessen beide sich gegenüberliegende, längserstreckende Schnittkanten 72 Stoßkanten bilden, an denen eine gegenseitige Befestigung erfolgt (Figur 7). Dieses Fügen der Schnittkanten 72 des gerollten bzw. gebogenen Blechstücks 60' miteinander kann mittels Laserschweißen durch eine Schweißanlage 62 vorgenommen werden. Der Hülsenrohling 68 wird auf diese Weise an den gegenüber liegenden Schnittkanten 72 zu einer geschlossenen Hülse längs verschweißt (Figur 8). In Figur 9 ist ein in Umfangsrichtung geschlossenes Gehäuse 66 mit drei magnetischen Zonen nach dem Rollen bzw. Biegen und dem Verschweißen der Schnittkanten 72 durch Anbringen einer längs verlaufenden Schweißnaht 69 zu sehen.

Vor dem Einbau des Gehäuses 66 in einem Ventil oder anderen Aggregat wird das Gehäuse 66 einer Endbearbeitung unterzogen, um das feste Gehäuse 66 in einer gewünschten Geometrie vorliegen zu haben. Im Falle eines Einsatzes eines erfindungsgemäß hergestellten Gehäuses 66 in einem Brennstofieinspritzventil kann es von Vorteil sein, das Gehäuse 66 durch fertigungstechnische Maßnahmen wie Abstrecken, Rollieren, Rundkneten, Bördeln und/oder Auftulpen spezifisch auszuformen. Mit dem Gehäuse 66 liegt ein Bauteil vor, das in einem bekannten Brennstoffeinspritzventil gemäß Figur 1 die Summe der Funktionen des Ventilrohrs bestehend aus Kern 2, Zwischenteil 12 und Ventilsitzträger 16 komplett übernehmen kann und sich somit auch beispielsweise über die gesamte axiale Länge eines Brennstoffeinspritzventils erstreckt.

Figur 10 zeigt einen schematischen Ausschnitt aus einem Brennstoffeinspritzventil mit einem erfindungsgemäß hergestellten Gehäuse 66, das als dünnwandige Hülse im Ventil verbaut ist und dabei den Kern 2 und den Anker 27 radial und in Umfangsrichtung umgibt und dabei selbst von der Magnetspule 1 umgeben ist. Figur 11 zeigt den Ausschnitt XI in Figur 10 in einer vergrößerten Darstellung. Dabei wird deutlich, dass der in seinen Magneteigenschaften veränderte und z.B. austenitische mittlere Bereich der Legierzone 63 des Gehäuses 66 im axialen Erstreckungsbereich des Arbeitsluftspaltes 70 zwischen dem Kern 2 und dem Anker 27 liegt, um die Magnetkreislinien optimal und effektiv im Magnetkreis zu leiten.

Die Erfindung ist keinesfalls auf den Einsatz in Brennstoffeinspritzventilen oder Magnetventilen für Antiblockiersysteme beschränkt, sondern betrifft alle elektromagnetisch betätigbaren Ventile unterschiedlicher Anwendungsgebiete und allgemein alle festen Gehäuse in Aggregaten, bei denen Zonen unterschiedlichen Magnetismus aufeinanderfolgend erforderlich sind. Auf die erfindungsgemäße Weise sind nicht nur Gehäuse 66 mit drei aufeinander folgenden Zonen herstellbar, sondern auch Gehäuse 66 mit mehr als drei Zonen.

## Patentansprüche

1. Verfahren zur Herstellung eines festen Gehäuses (66), insbesondere eines Ventilgehäuses für ein elektromagnetisch betätigbares Ventil,
wobei das Gehäuse (66) wenigstens drei Zonen besitzt und jeweils zwei unmittelbar aufeinander folgende Zonen unterschiedliche Magneteigenschaften aufweisen,
mit den Verfahrensschritten:
a) Bereitstellen eines Blechstreifens (60) aus einem magnetischen bzw. magnetisierbaren Material,
b) Einbringen eines Zusatzstoffes in einem mittleren Bereich des Blechstreifens (60) und dortiges Aufschmelzen zur Bildung eines nichtmagnetisierbaren Gefüges,
c) Ablängen des Blechstreifens (60) zu einem Blechstück (60') gewünschter Breite (b),
d) Verformung des Blechstücks (60') in eine Hülsenform,
e) gegenseitige Befestigung der sich nun gegenüberliegenden, in Längsrichtung der Hülse verlaufenden Schnittkanten (72) zur Bildung eines Hülsenrohlings (68),
f) Endbearbeitung des Hülsenrohlings (68) bis zum Erreichen einer gewünschten Geometrie des Gehäuses (66).

2. Verfahren nach Anspruch 1, **dadurch gekennzeichnet, dass** der Blechstreifen (60) ferromagnetisch und/oder weichmagnetisch ist bzw. ein ferritisches oder martensitisches Materialgefüge aufweist.

3. Verfahren nach Anspruch 1 oder 2, **dadurch gekennzeichnet, dass** der Blechstreifen (60) als flach gewalzter, maßgeschneiderter Blechabschnitt bereitgestellt wird.

4. Verfahren nach Anspruch 1 oder 2 oder 3, **dadurch gekennzeichnet, dass** als Zusatzstoffe Nickel, Mangan, Kohlenstoff oder Stickstoff einzeln oder in Kombination in den Blechstreifen (60) eingebracht werden.

5. Verfahren nach Anspruch 4, **dadurch gekennzeichnet, dass** der Zusatzstoff als Draht (61) oder als Pulver zugeführt wird.

6. Verfahren nach Anspruch 4, **dadurch gekennzeichnet, dass** der Zusatzstoff durch partielles Beschichten oder Aufwalzen auf dem Blechstreifen (60) aufgebracht wird.

7. Verfahren nach Anspruch 4 oder 5 oder 6, **dadurch gekennzeichnet, dass** das Aufschmelzen mittels Laserschweißen, Elektronenstrahlschweißen oder Plasmaschweißen erfolgt.

8. Verfahren nach einem der Ansprüche 4 bis 7, **dadurch gekennzeichnet, dass** nach dem Aufschmelzen eine Legierzone (63) entsteht, die sich entweder über die gesamte Dicke des Blechstreifens (60) oder nur teilweise über dessen Dicke erstreckt und die die nichtmagnetisierbare Zone bildet.

9. Verfahren nach einem der vorhergehenden Ansprüche, **dadurch gekennzeichnet, dass** vor dem Einbringen des Zusatzstoffes eine Längsnut (64) im Blechstreifen (60) ausgeformt wird.

10. Verfahren nach einem der vorhergehenden Ansprüche, **dadurch gekennzeichnet, dass** die Begrenzungskanten (65) und die Schnittkanten (72) des Blechstücks (60') mit Fasen versehen werden.

11. Verfahren nach einem der vorhergehenden Ansprüche, **dadurch gekennzeichnet, dass** die Verformung des Blechstücks (60') in eine Hülsenform mittels Rollen, Rollieren oder Biegen erfolgt.

12. Verfahren nach Anspruch 11, **dadurch gekennzeichnet, dass** die Verformung des Blechstücks (60') mehrstufig erfolgt.

13. Verfahren nach einem der vorhergehenden Ansprüche, **dadurch gekennzeichnet, dass** die gegenseitige Befestigung der sich nach der Verformung gegenüberliegenden, in Längsrichtung der Hülse verlaufenden Schnittkanten (72) mittels Laserschweißen erfolgt.

14. Verfahren nach einem der vorhergehenden Ansprüche, **dadurch gekennzeichnet, dass** die Endbearbeitung des Hülsenrohlings (68) mittels Abstrecken, Rollieren, Rundkneten, Bördeln und/oder Auftulpen erfolgt.

## Claims

1. Method for producing a solid housing (66), in particular a valve housing for an electromagnetically actuable valve, the housing (66) possessing at least three zones, and in each case two directly successive zones having different magnetic properties, with the method steps:
a) provision of a sheet-metal strip (60) consisting of a magnetic or magnetizable material,
b) introduction of an additive in a middle region of the sheet-metal strip (60) and fusion there in order to form a non-magnetizable structure,
c) cutting of the sheet-metal strip (60) to length into a sheet-metal piece (60') of desired width (b) ,
d) shaping of the sheet-metal piece (60') into a sleeve shape,
e) mutual fastening of now opposite cut edges (72), running in the longitudinal direction of the sleeve, in order to form a sleeve blank (68),
f) final machining of the sleeve blank (68) in order to achieve a desired geometry of the housing (66).

2. Method according to Claim 1, **characterized in that** the sheet-metal strip (60) is ferromagnetic and/or soft-magnetic or has a ferritic or martensitic material structure.

3. Method according to Claim 1 or 2, **characterized in that** the sheet-metal strip (60) is provided as a flat-rolled cut-to-size sheet-metal portion.

4. Method according to Claim 1 or 2 or 3, **characterized in that** nickel, manganese, carbon or nitrogen are introduced singly or in combination as additives into the sheet-metal strip (60).

5. Method according to Claim 4, **characterized in that** the additive is supplied as a wire (61) or as a powder.

6. Method according to Claim 4, **characterized in that** the additive is applied by partial coating or rolling on the sheet-metal strip (60).

7. Method according to Claim 4 or 5 or 6, **characterized in that** fusion takes place by means of laser welding, electron-beam welding or plasma welding.

8. Method according to one of Claims 4 to 7, **characterized in that**, after fusion, an alloying zone (63) is obtained, which extends either over the entire thickness of the sheet-metal strip (60) or only partially over its thickness which forms the non-magnetizable zone.

9. Method according to one of the preceding claims, **characterized in that**, before the introduction of the additive, a longitudinal groove (64) is formed in the sheet-metal strip (60).

10. Method according to one of the preceding claims, **characterized in that** the boundary edges (65) and the cut edges (72) of the sheet-metal piece (60') are provided with chamfers.

11. Method according to one of the preceding claims, **characterized in that** the shaping of the sheet-metal piece (60') into a sleeve shape takes place by means of rolling, tumbling of bending.

12. Method according to Claim 11, **characterized in that** the shaping of the sheet-metal piece (60') is multi-stage.

13. Method according to one of the preceding claims, **characterized in that** the mutual fastening of the cut edges (72) opposite one another after shaping and running in a longitudinal direction of the sleeve takes place by means of laser welding.

14. Method according to one of the preceding claims, **characterized in that** the final machining of the sleeve blank (68) takes place by means of ironing, tumbling, swaging, beading and/or hobbing.

## Revendications

1. Procédé pour fabriquer un boîtier solide (66), en particulier un boîtier de soupape pour une soupape à commande électromagnétique,
dans lequel le boîtier (66) possède au moins trois zones et à chaque fois deux zones immédiatement successives présentent des propriétés magnétiques différentes, comprenant les étapes de procédé suivantes :
a) fourniture d'un ruban de tôle (60) en matériau magnétique ou magnétisable,
b) introduction d'une substance supplémentaire dans une région centrale du ruban de tôle (60) et fusion à cet endroit de celle-ci pour former un joint non magnétisable,
c) découpage à la longueur souhaitée du ruban de tôle (60) pour donner une pièce de tôle (60') de largeur souhaitée (b),
d) déformation de la pièce de tôle (60') en une forme de douille,
e) fixation mutuelle des arêtes de coupe (72) à présent opposées, s'étendant dans la direction longitudinale de la douille, pour former une ébauche de douille (68),
f) usinage final de l'ébauche de douille (68) jusqu'à l'obtention d'une géométrie souhaitée du boîtier (66).

2. Procédé selon la revendication 1, **caractérisé en ce que** le ruban de tôle (60) est ferromagnétique et/ou magnétique doux, ou présente un joint en matériau ferritique ou martensitique.

3. Procédé selon la revendication 1 ou 2, **caractérisé en ce que** le ruban de tôle (60) est fourni sous forme de portion de tôle laminée à plat, et découpée à la dimension souhaitée.

4. Procédé selon la revendication 1 ou 2 ou 3, **caractérisé en ce que** l'on introduit comme substances supplémentaires dans le ruban de tôle (60) du nickel, du manganèse, du carbone ou de l'azote individuellement ou en combinaison.

5. Procédé selon la revendication 4, **caractérisé en ce que** la substance supplémentaire est apportée sous forme de fil (61) ou de poudre.

6. Procédé selon la revendication 4, **caractérisé en ce que** la substance supplémentaire est appliquée par revêtement partiel ou laminage sur le ruban de tôle (60).

7. Procédé selon la revendication 4 ou 5 ou 6, **caractérisé en ce que** la fusion s'effectue au moins d'un soudage au laser, d'un soudage par faisceau d'électrons ou par soudage au plasma.

8. Procédé selon l'une quelconque des revendications 4 à 7, **caractérisé en ce qu'**après la fusion, il se crée une zone alliée (63), qui s'étend soit sur toute l'épaisseur du ruban de tôle (60) soit seulement en partie sur son épaisseur et qui forme la zone non magnétisable.

9. Procédé selon l'une quelconque des revendications précédentes, **caractérisé en ce qu'**avant l'introduction de la substance supplémentaire, une rainure longitudinale (64) est formée dans le ruban de tôle (60).

10. Procédé selon l'une quelconque des revendications précédentes, **caractérisé en ce que** les arêtes de limitation (65) et les arêtes de coupe (72) de la pièce de tôle (60') sont pourvues de biseaux.

11. Procédé selon l'une quelconque des revendications précédentes, **caractérisé en ce que** la déformation de la pièce de tôle (60') en une forme de douille s'effectue au moyen d'un laminage, d'un roulage ou d'un cintrage.

12. Procédé selon la revendication 11, **caractérisé en ce que** la déformation de la pièce de tôle (60') s'effectue en plusieurs étapes.

13. Procédé selon l'une quelconque des revendications précédentes, **caractérisé en ce que** la fixation mutuelle des arêtes de coupe (72) opposées après la déformation, s'étendant dans la direction longitudinale de la douille, s'effectue par soudage au laser.

14. Procédé selon l'une quelconque des revendications précédentes, **caractérisé en ce que** l'usinage final de l'ébauche de douille (68) s'effectue au moyen d'un étirage, d'un roulage, d'un pétrissage rotatif, d'un rabattage et/ou d'un emboutissage.
